# EUROPEAN PATENT APPLICATION

(11) **EP 1 983 639 A1**
(43) Date of publication of application: **22.10.2008**
(21) Application number: 07106611.2
(22) Date of filing: 20.04.2007
(51) Int. Cl.: H02M 3/335

(54) **Switched mode power supply comprising a rectifier circuit**

(71) Applicant: Thomson Licensing, 92100 Boulogne-Billancourt (FR)
(72) Inventor: Marchand, Philippe, 35500, Vitre (FR); Ploquin, Didier, 35850, PARTHENAY DE BRETAGNE (FR); Morizot, Gerard, 38500, Voiron (FR)
(74) Representative: Arnold, Klaus-Peter

(57) **Abstract**

The switched mode power supply comprises an inductor (TR), a switching transistor (T1) coupled in series with the inductor (TR), and a rectifier circuit. The rectifier circuit comprises a switch (T3) coupled with the inductor (TR) for a rectification of an output voltage (Vs) and a control circuit (MC1) operating in a monostable mode. The switch (T3) is operated in particular in a synchronous mode with the same switching frequency as the switching transistor (T1, T2). The rectifier circuit can be used advantageously with a switched mode power supply having a push-pull half-bridge configuration and operating as a resonant converter or a quasi-resonant converter with soft switching for an application within a plasma television set.

## Description

### FIELD OF THE INVENTION

The present invention relates to a switched mode power supply comprising a transformer, a switching transistor and a rectifier circuit with a switch and a control circuit for providing a rectification of an output voltage in a synchronous rectification mode.

### BACKGROUND OF THE INVENTION

It is well known that diodes used for rectification of an AC voltage have a considerable energy dissipation because of the forward voltage drop, in particular when used for rectification of small AC voltages. For improving the efficiency of a rectifier circuit therefore a controllable switch is often used, for example a MOSFET switch with a small drain-source resistance. A disadvantage of a MOSFET rectifier circuit is, that a control circuit is required for the operation of the MOSFET.

A power supply with a synchronous rectifier circuit comprising a current transformer for the operation of a MOSFET switch is known from DE-A-19704604. Switching through of the switch is provided by means of a positive voltage provided by a first secondary winding of a transformer of the power supply, and the current transformer is used for sensing a current flow of a second secondary winding for blocking the switch, when the polarity of the current through the second secondary winding reverses. A rectifier circuit of this kind can be used in particular for a flyback converter.

From US 2006/0187692 A1 a rectifier circuit with a MOSFET switch and a control circuit having a driver circuit with a first and a second comparator for the operation of the switch is known. The first comparator is used for controlling the voltage polarity across the switch and the second comparator is connected with a reference voltage for the regulation of the switch for providing a stabilized output voltage.

A switched mode power supply with a rectifier circuit comprising a comparator being also connected with a reference voltage for providing a stabilized DC output voltage is known from EP-A-1717938. A DC rectifier circuit of this kind can used for example to provide a regulated output voltage being independent of the regulation of a further regulated output voltage of the switched mode power supply. The switched mode power supply includes a soft switching half-bridge arrangement operating in a quasi resonant mode with a feedback control from secondary side. DC/DC converters of a half bridge type with soft switching are also known from EP-A-1717940 and FR 2738417.

Also known are integrated driver circuits for operating with a MOSFET switch as a synchronous rectifier circuit, for example integrated circuits STSR3 and STSR2, the STSR2 being designed for a full-wave rectifier circuit and the STSR3 for a half-wave rectifier circuit. The STSR3 operates over a wide operating frequency range and comprises an anticipation circuit for preventing secondary side shoot-through conditions at turn-on of the switch. Several anticipation times can be set to provide a switch-off of the switch in advance of switching on the primary side switching transistor.

### BRIEF SUMMARY OF THE INVENTION

The switched mode power supply according to the invention comprises an inductor, a switching transistor coupled in series with the inductor, a rectifier circuit with a switch being coupled with the inductor for a rectification of an output voltage and further a control circuit operating in a mono-stable mode for controlling the operation of the switch. The switch is operated in particular in a synchronous mode with the same switching frequency as the switching transistor, and the switching transistor is operated essentially with a constant switching frequency. The control gate contains for example a control circuit having a gate-on time, which is constant and in particular independent of any load condition, and which is well below the blocking time of the switching transistor. The switch is therefore operated always in a safe operating condition and any unwanted reverse currents through the switch are avoided.

The rectifier circuit comprises advantageously a diode, in particular a Schottky diode, which takes over a remaining current under high load condition, when the switch is already closed and which can take over therefore a part of the dissipation losses of the rectifier circuit in case of such a high load condition.

The switched mode power supply comprises in a further aspect of the invention a feedback loop for coupling the output voltage of the switched mode power supply to a driver circuit of the switching transistor. The switch-off time of the switch is determined only by the time constant of the control circuit of the switch and is therefore independent of the switching signal of the switched mode power supply.

The mono-stable operation of the control circuit can be provided for example by using a digital mono-flop circuit, or by using a comparator, to which inputs a ramp generator and a threshold circuit are coupled. The control circuit for operating the switch can be designed therefore with cheap circuit components and does in particular not require a current measurement of the current flowing through the inductor.

The rectifier circuit can be used advantageously with a switched mode power supply having a push-pull half-bridge configuration and operating as a resonant converter or a quasi-resonant converter with soft switching for an application within a plasma television set. The switch is in a preferred embodiment a MOSFET.

### BRIEF DESCRIPTION OF THE DRAWINGS

Preferred embodiments of the invention are explained in more detail below now by way of example with reference to schematic drawings, which show:
- Fig. 1: a switched mode power supply including a rectifier circuit in accordance with the invention,
- Fig. 2: a preferred embodiment of the switched mode power supply and a rectifier circuit as shown in figure 1,
- Fig. 3: voltage and current diagrams of the circuit of figure 2 operating in a high load condition, and
- Fig. 4: the circuit of figure 2 operating in a standby condition.

### DETAILED DESCRIPTION OF PREFERRED EMBODIMENTS

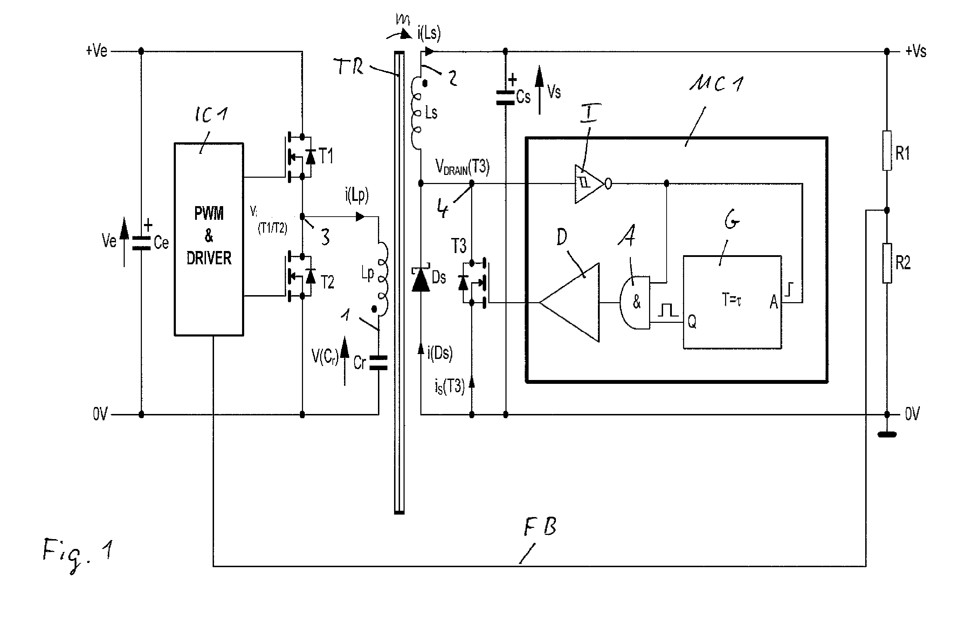

In figure 1 a switched mode power supply is shown including a rectifier circuit in accordance with the invention. The switched mode power supply comprises a transformer TR with a primary winding Lp and a secondary winding Ls1, the transformer being designed for providing mains isolation. A first switching transistor T1 is coupled in series between the primary winding Lp and a DC input voltage Ve, provided by an input capacitor Ce, and a second switching transistor T2 is arranged in parallel with the primary winding Lp and connected to ground. The switching transistors T1, T2 are operated in a push-pull mode by a driver circuit IC1 and are arranged in this embodiment as a half bridge configuration.

The winding sense of the primary winding Lp1 and secondary winding Ls1 is indicated by dots, according to which the terminals 1 and 2 labeled with a dot have same voltage polarities during operation of the switched mode power supply. In series with the primary winding Lp, between Lp and ground in this embodiment, a resonant capacitor Cr is coupled for providing a quasi-resonant operation of the switched mode power supply. A switched mode power supply of this kind is described for example in FR 27387417 and EP 1717940.

A switch T3, in this embodiment a MOSFET, is arranged on the secondary side in series with the secondary winding Ls1. An output capacitor Cs is coupled in parallel with the secondary winding Ls1 and switch T3 for providing a smoothed DC output voltage Vs. The switch T3 is coupled between the secondary winding Ls1 and ground in this embodiment. In parallel with the switch T3 a diode Ds is arranged to allow a current i(Ds) to flow from ground in the direction of the secondary winding Ls1, even when the switch T3 is closed.

For a regulation of the output voltage Vs, a feedback loop FB is provided, which couples a fraction of the output voltage Vs via a voltage divider with resisters R1, R2 back to the primary side to the driver circuit IC1. The driver circuit IC1 operates essentially with a fixed switching frequency and provides pulse-width modulated push-pull drive signals for changing the duty cycle of the switching transistors T1, T2 for a compensation of output load variations.

The switch T3 is controlled by a control circuit MC1, which operates according to the invention in a mono-stable mode. The control circuit MC1 comprises an inverter I, which is coupled with an input to a junction 4 arranged between the switch T3 and the secondary winding Ls1 for sensing the voltage polarity at the secondary winding Ls1. The inverter I provides a control signal for a first input of an AND gate A and for a control gate G.

The control gate G operates in a mono-stable mode and comprises for example a timer circuit. The control gate G switches from low to high at output Q, when a high pulse is received at input A, and switches to low after a defined period T = τ = constant. The control gate G comprises for example a ramp generator and a threshold detector, the ramp generator comprising a timer capacitor which is charged when an input signal is received, and when a defined threshold is reached, the threshold detector provides an off signal for discharging the timer capacitor and for providing the low signal after T = τ. Mono-stable circuits of this kind are well known in the art.

The output signal of the control gate G is coupled to a second input of the AND gate A, which output is coupled to the input of a switch driver D which is coupled with an output to a control input of the switch T3 for controlling the operation of switch T3. The control circuit MC1 together with the switch T3 operate as a synchronous rectifier circuit during operation of the switched mode power supply.

The operation of the rectifier circuit is as follows: When the voltage at terminal 2 of secondary winding Ls is positive and the switch T3 is switched through, a current i(Ls) is provided for charging capacitor Cs. When the polarity across winding Ls1 changes, then the voltage at terminal 2 is low and at junction point 4 is high, and then the output of the inverter I is accordingly "low". This "low" signal provides a "low" signal at the output of the AND gate A, which keeps the switch T3 closed.

When the polarity across winding Ls1 changes again, then the voltage at terminal 2 is positive and at the junction 4 the voltage is then low, and the output of inverter I switches subsequently to "high". A "high" signal at the output of inverter I triggers the control gate G, which provides a "one shot" signal at output Q, and hence the AND gate switches to "high" for switching through the switch T3 via driver D, because then both input signals at the AND gate are "high".

The control gate G switches after a defined time T=τ from "high" to "low" at output Q. Then the output of the AND gate A switches from "high" to "low" and the driver D therefore switches off the switch T3 for blocking the current through the switch T3. The current through secondary winding Ls may still continue to flow via diode Ds, until the polarity of the secondary winding Ls is reversed again in accordance with the switching operation of the switching transistors T1, T2.

When the polarity at the secondary winding Ls is reversed again with the next switching cycle, the voltage at junction 4 is high and therefore the output of inverter I is "low". Then the AND gate A is blocked and therefore a switching through of switch T3 is not possible. The synchronous rectifier circuit therefore works as a half wave rectification circuit.

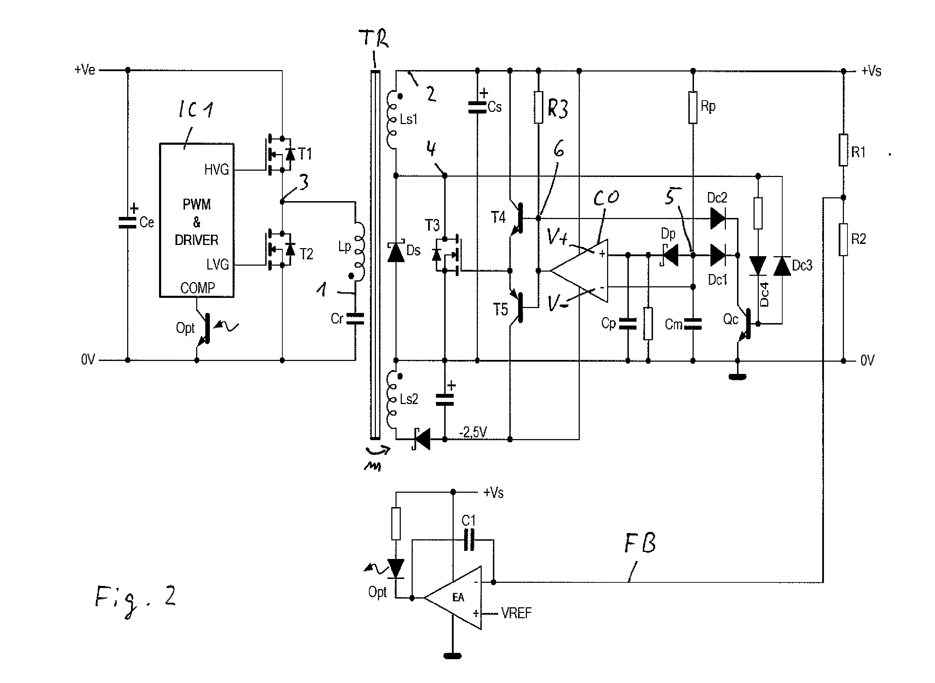

A preferred embodiment of the rectifier circuit of figure 1 is shown in figure 2, in which discrete analog components, in particular cheap circuit parts are used for realizing the control circuit MC1 of figure 1. The primary side of the switched mode power supply with the switching transistors T1, T2 and the driver circuit IC1 corresponds essentially with the circuit as shown in figure 1, and same reference symbols are used for same circuit elements in figures 1 and 2.

At the secondary side, the secondary winding Ls1, diode Ds, switch T3, and capacitor Cs are arranged for providing an output voltage Vs, as described before with regard to figure 1. For the operation of the switch T3 as a synchronous rectifier, a comparator CO is provided, which output controls a push-pull switching stage with transistors T4, T5, which provide the necessary current for the switching of the switch T3, in the embodiment of figure 2 being a MOSFET. The transformer TR comprises a further secondary winding Ls2, for providing a negative operating voltage of -2,5 V for the comparator CO and transistor T5, which extends the output voltage range of the comparator CO and transistors T4, T5 to negative voltages for a fast switching off of the MOSFET.

Between the positive input V+ of the comparator CO and ground a capacitor CP is coupled, which is charged up to a positive voltage via a diode Dp and a resistor Rp, which is connected with the output voltage Vs. Between the negative input V- of comparator CO and ground a second capacitor Cm is coupled, which is also coupled to resistor Rp, by means of a junction 5 between diode Dp and resistor Rp. Because capacitor Cp is decoupled via diode Dp from junction 5, the voltage across Cp is not influenced by voltage drops across capacitor Cm, and remains essentially constant. The elements Rp, Dp, Cp provide therefore a threshold voltage for the operation of the comparator CO.

The capacitor Cm is also charged via resistor Rp, but is periodically discharged by means of a transistor Qc and a diode Dc1. A current input of transistor Qc, the collector, is coupled via diode Dc1 with capacitor Cm, and further via a diode Dc2 to a junction 6, which is connected with the output of comparator CO and the base terminals of transistors T4, T5, for keeping transistor T4 switched-off, therefore also MOSFET switch T3, when transistor Qc is switched through.

The base of transistor Qc is coupled via a diode Dc3 and a diode Dc4 with junction 4 such, that the transistor Qc switches through by means of Dc4, when the voltage at junction 4 is high, and when the voltage at junction 4 is low, transistor Qc is blocking by means of Dc3.

The operation of the comparator CO is therefore as follows: When the voltage at junction 4 is high, the diode Dc4 is conducting and therefore transistor Qc is switched through. Then diode Dc1 is also conducting and discharging capacitor Cm, and diode Dc2 is conducting, which blocks transistor T4 and therefore switch T3 is closed.

When the voltage across secondary winding Ls1 reverses polarity in accordance with the operation of switching transistors T1, T2, the voltage at junction 4 goes to low which blocks transistor Qc accordingly via diode Dc3. Then capacitor Cm is charged via resistor Rp. As long as the voltage across capacitor Cp is higher than the voltage across capacitor Cm, the output of comparator CO is high and therefore transistor T4 is switched through and also switch T3.

When the voltage across capacitor Cm reaches the threshold voltage of capacitor Cp, the comparator CO switches to low and therefore switch T3 is blocked via transistors T4, T5. The switch-on time of switch T3 is therefore independent on the load of the switched mode power supply and the switching frequency of the driver circuit IC1, and is only determined by the values of resistor Rp and capacitor Cm, the threshold voltage at capacitor Cp and the stabilized output voltage Vs. The switch-on time τ is in particular arranged such that the switch T3 is closed well in advance before the polarity at terminal 2 of winding Ls1 changes from high to low, and therefore any reverse current through switch T3 is avoided under all operation conditions of the switched mode power supply.

When the voltage at terminal 2 switches to low, the voltage at junction 4 switches to high, and then again transistor Qc is switched through for discharging capacitor Cm via diode Dc1 and for blocking transistor T4 via diode Dc2. The switch T3 is therefore operated in correspondence with the switching transistors T1, T2. The switch on of switch T3 is initiated via transistor Qc, which is blocked when the voltage at terminal 2 switches to high and at junction 4 to low. Transistor T4 is then switched through by means of comparator CO. Switch T3 is switched off after time t=, when capacitor Cm is charged to the threshold voltage as defined by the voltage across capacitor Cp.

The rectifier circuit as described with regard to figure 2 provides therefore a very cost efficient and reliable solution for the operation of the switch T3. By using a negative operating voltage as provided by secondary winding Ls2, in particular very low supply voltages Vs can be generated by the switched mode power supply. The start up of the rectifier circuit is accomplished by means of a resistor R3, via which transistor T4 and therefore switch T3 is switched through, when the voltage at terminal 2 is high, after switching on the switched mode power supply. The feedback loop FB comprises in this embodiment an opto-coupler Opt, for transferring a regulation signal to the driver circuit IC1.

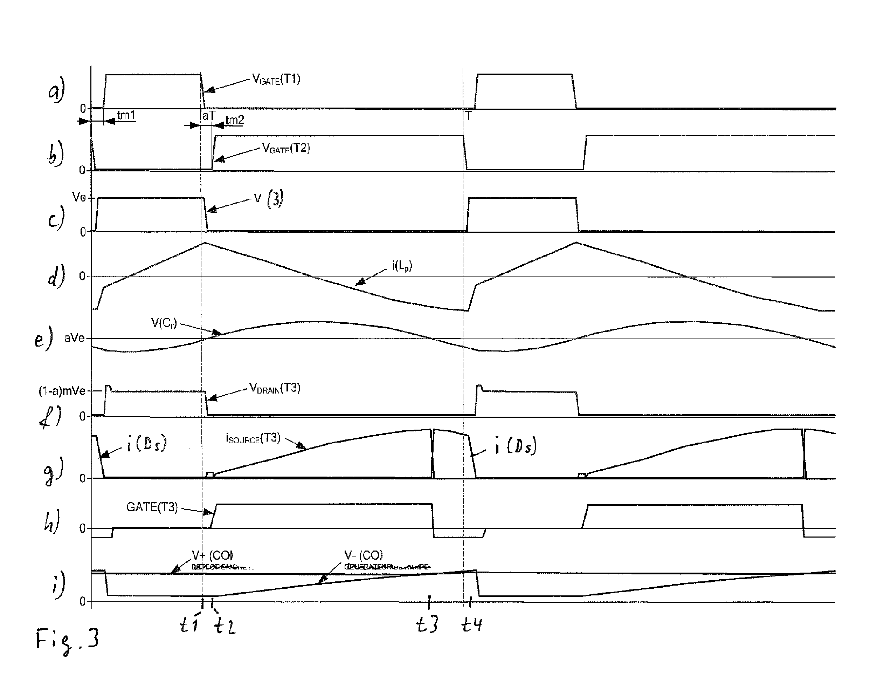

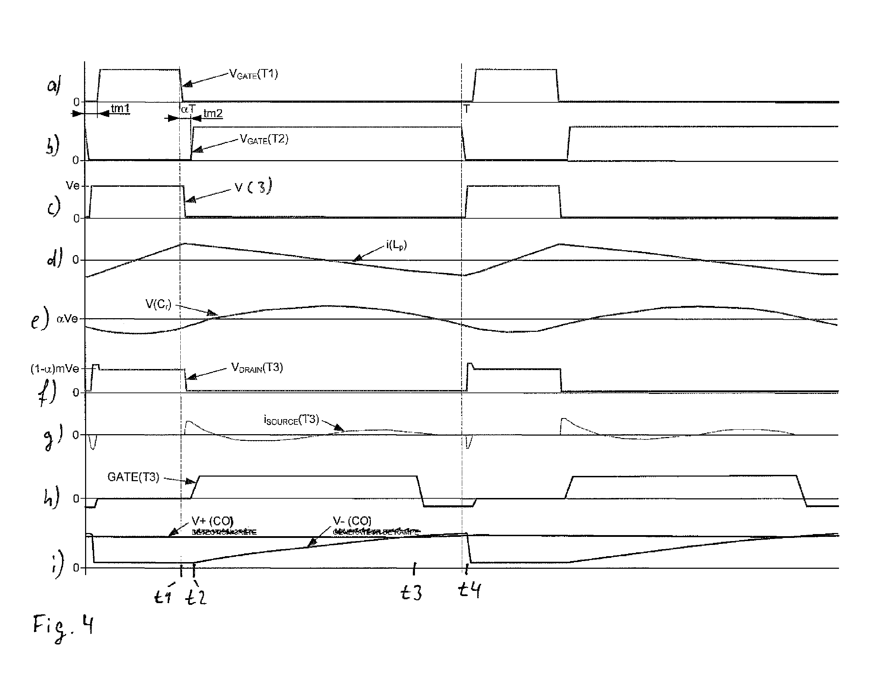

The operation of the switched mode power supply shown in figure 2 is explained now further with regard to voltage and current diagrams shown in figure 3, which correspond with a full load operation of the switched mode power supply, and voltage and current diagrams shown in in figure 4, which correspond with an operation of the switch mode power supply in a standby mode. The voltage diagram a) of figure 3 shows the voltage at the gate of MOSFET T1 and voltage diagram b) respectively the voltage at the gate of MOSFET T2. The driver circuit IC1 provides a delay tm2, respectively tm1, between switching on MOSFET T2 after MOSFET T1 is switched off and vice versa, to avoid a short circuit situation for the supply voltage Ve.

The voltage Ve at junction 3 between MOSFET T1 and T2 changes in accordance with the switching operation of T1 and T2 and represents the voltage across primary winding Lp and capacitor Cr with regard to ground, figure 3c). The current through primary winding Lp, shown in diagram 3d), is therefore rising, when the voltage at junction 3 is high, and is decreasing, when the voltage at junction 3 is low. The voltage across capacitor Cr, figure 3e), represents the resonant voltage being in phase with the switching operation of the switching transistors T1, T2.

The voltage at junction 4, at the drain of the MOSFET switch T3, figure 3f), corresponds in shape essentially with the voltage across primary winding Lp and has a voltage value depending on the input voltage Ve, winding ratio m of transformer TR, and the voltage across capacitor Cr, when the switch T3 is closed. The voltage controlling the operation of the switch T3, the gate voltage for the MOSFET T3 in this embodiment, is shown in Figure 3h). The corresponding current through the secondary winding Ls1 under full load condition consists of the current flowing through switch T3 and the current flowing through the diode Ds, as shown in figure 3g).

As can be seen, the switch T3 is switched through at time t2, shortly after time t1, at which the switching transistor T1 is blocked. The current through switch T3 continues to flow until time t3, at which the switch T3 is blocked in response to the operation of the comparator Co. The remaining energy stored in the transformer TR generates then a current flowing through diode Ds, until the polarity across secondary winding Ls1 is reversed at time t4, in response to the voltage at junction 3, figure 3c).

The voltages at the inputs V+, V- of the comparator CO are shown in figure 3i). As can be seen, the voltage across capacitor Cm, voltage at input V-, begins to rise at time t2, when the switch T3 is switched through, figure 3h), in response to the blocking of transistor Qc. At time t3 the voltage at input V- reaches the voltage threshold at input V+ causing the blocking of switch T3 by means of comparator CO. The time t3 is well ahead the time t4, at which the next switching cycle of the switched mode power supply begins, providing therefore a save margin for the switching off of switch T3.

In figure 4 the same voltage and current diagrams a) - e) are shown for a situation, in which the switched mode power supply operates in a low load condition, for example in a standby mode. As can be seen in figure 4d), the current through the primary winding Lp is significantly lower in comparison with figure 3d), also the switching-on time of the switching transistor T1 is shorter. The switch-off time of the switch T3 at time t3 is still the same, as compared with figure 3g), because the voltage Vs, which charges capacitor Cm, is regulated by the feedback loop FB under all load conditions and therefore constant. The current through switch T3 for charging capacitor Cs is now very small because the power consumption of the load in this operating condition is very small. The current through the diode Ds is essentially zero. Therefore, only the switch-on time of the switch T3 is controlled in response to the operation of the switching transistors T1, T2, but not the switch-off time of the switch T3, which depends only on the control circuit MC1, respectively comparator CO, operating in a monostable mode.

The present invention is not limited to the embodiments as described before with regard to the figures, and various available modifications come possible for those skilled in the art without departing from the cope of the invention. The invention as described therefore resides in the claims.

The rectifier circuit can be used for example also with flyback converters operating with a pulse width modulation, or any DC/DC up-converter or down-converter. For the switch T3 in particular a large variety of suitable semiconductor switches may be used, as known by a person skilled in the art.

## Claims

1. Switched mode power supply comprising an inductor (TR) for providing an output voltage (Vs), a switching transistor (T1) coupled in series with the inductor (TR), and a rectifier circuit comprising a switch (T3) coupled with the inductor (TR) for a rectification of the output voltage (Vs), **characterized in that** the rectifier circuit (T3, MC1, Ds) comprises a control circuit (MC1) operating in a monostable mode for the operation of the switch (T3).

2. The switched mode power supply of claim 1, **wherein** the rectifier circuit (T3, MC1, Ds) comprises a diode (Ds), in particular a Schottky diode, coupled in parallel with the switch (T3).

3. The switched mode power supply of claim 1 or 2, **wherein** the switch (T3) is operated in a synchronous mode with the same switching frequency as the switching transistor (T1, T2).

4. The switched mode power supply of claim 1, 2 or 3, **comprising** a driver circuit (IC1) for controlling the operation of the switching transistor (T1) and a feedback loop (FB) coupling the output voltage (Vs) to the driver circuit (IC1) for a stabilization of the output voltage (Vs).

5. The switched mode power supply of one of the preceding claims, **wherein** the driver circuit (IC1) provides pulse-width modulated driver signals with an essentially constant switching frequency for the operation of the switching transistor (T1).

6. The switched mode power supply of one of the preceding claims, **wherein** the inductor (TR) is a transformer with a primary winding (W1) and a secondary winding (W2, W3), the primary winding (W1) being coupled in series with the switching transistor (T1), and wherein the switch (T3) is coupled in series with the secondary winding (W2).

7. The switched mode power supply of claim 6, **wherein** the switching transistor (T1) is coupled in series with a second switching transistor (T2), both being coupled via a junction (3) with the primary winding (W1) for operating in a push-pull half-bridge configuration.

8. The switched mode power supply of claim 6 or 7, comprising a resonant capacitor (Cr) coupled in series with the primary winding (Lp) for an operation as a resonant converter or a quasi-resonant converter with soft switching.

9. The switched mode power supply of one of the preceding claims, **wherein** the control circuit (MC1) comprises a monostable gate circuit (G), for example with a comparator (CO), a ramp generator (Rp, Cm, Qc) and a threshold circuit (Rp, Dp, Cp), for switching off the switch (T3) after a defined time (τ).

10. The switched mode power supply of claim 9, **wherein** the ramp generator (Rp, Cm, Qc) and the threshold circuit (Rp, Dp, Cp) are coupled respectively to a first and a second input of the comparator (CO) for controlling the operation of the switch (T3), and wherein the switch (T3) is a MOSFET.
